# EUROPEAN PATENT APPLICATION

(11) **EP 4 603 793 A1**
(43) Date of publication of application: **20.08.2025**
(21) Application number: 25153028.3
(22) Date of filing: 21.01.2025
(51) Int. Cl.: G01B 11/245

(54) **VISION SYSTEM AND PROCESS FOR MEASURING THE STRAIGHTNESS OF GEOMETRICALLY REGULAR INSPECTABLE PARTS**

(30) Priority: 13.02.2024 IT 202400002983
(71) Applicant: Romanò, Francesco, 20090 Cesano Boscone (MI) (IT)
(72) Inventor: Romanò, Francesco, 20090 Cesano Boscone (MI) (IT)
(74) Representative: Garavelli, Paolo

(57) **Abstract**

A vision system is described for measuring the straightness of geometrically regular inspectable parts, comprising two video cameras (1, 2) positioned mutually at 90 degrees, a feeding apparatus (10), a photocell (20) to identify the approach of the part to a viewing, VOA, a backlight apparatus (3, 4), a central processing unit, CPU, an algorithm based on the Pythagorean theorem to be able to measure univocally the straightness of the parts, a mechanical diversion apparatus (30) in the channel (11) to direct the parts towards the good or waste bin, wherein the step for measuring the straightness of the parts takes place during the flight time, allowing an instant classification as good or to be rejected. A vision process for measuring the straightness of geometrically regular inspectable parts is also described.

## Description

The present invention refers to a vision system for measuring the straightness of geometrically regular inspectable parts.

Furthermore, the present invention refers to a process for measuring the straightness of geometrically regular inspectable parts.

In general, the present invention relates to: Sorting according to optical properties; Measurement of thread contours or curvatures; Contour or curvature measurement to measure profiles by casting shadows; Optical detailing and scanning; Inspection of the external surface of cylindrical bodies or wires; Separate darkfield and brightfield detection.

In particular, the present invention refers to: Inspection of the external surface of cylindrical bodies or wires; Optical measurements of the diameter of moving objects; Investigation of the presence of defects or contamination in moving materials.

The state of the art is represented by US patent 4203673 A concerning a process and apparatus for optical inspection of the surface of an elongated cylindrical article. In the process, the surface of the article is optically scanned with light beams coming from different circumferential positions. Non-specular light reflected from the surface is detected simultaneously at different axial positions on both sides of the scanning position, at a small angle to the light beam plane, and in all circumferential positions around the axis. The scanning position along the axis is varied by moving the item along its length. Changes in the intensity of the reflected light are compared to identify any defects or irregularities on the surface. In some variations of the process, these intensity changes are compared to a reference level.

The equipment associated with this process includes a rotating mirror drum with a regular polygonal cross section. A radiation beam is swept through the article in a plane transverse to the axis, reflecting off fixed specular surfaces in different circumferential positions. There are two annular sensors: one positioned parallel to the scanning plane to detect the radiation reflected non-specularly from the surface of the article, and a second annular sensor, positioned on the opposite side of the scanning plane compared to the first, to detect the radiation reflected at lower angles from the surface. The position of the mirrors is such that the radiation beam is reflected directly and indirectly to cover the entire circumference of the item. In some configurations, adders are used to subtract the outputs of the two ring sensors. The arrangement of the mirrors is designed to evenly cover the entire surface of the item.

The state of the art is also represented by US patent 3870890 A concerning a process and an apparatus for determining the transversal dimensions of an elongated machined piece. It uses a single beam of light from a laser source that is scanned across an area containing the part. During each scan, the impact time of the light beam on the workpiece is measured using a photodiode system. The photodiodes, one for each perpendicular dimension of the piece, generate electrical signals that start the clock pulse count. The end of the signal marks the end of the pulse.

The dimensions of the piece are determined electronically by averaging the impact times during scans parallel to the two dimensions of the piece. The apparatus includes an optical setup with a mirror, a rotating reflective polygon, and a prism to direct the light beam into the measurement area. In one variant, the light beam is split into two beams, allowing simultaneous scans along the two perpendicular directions.

The state of the art is also represented by US patent 2017/0307541 A1 concerning a process and a system for the optical inspection of parts. These parts feature a length, a width, an axle, and a head with a bottom bearing surface. The process involves feeding the part onto a split angled track configured as a pair of slide rails separated by a gap. The part is suspended on the tracks by its lower support surface, allowing it to slide towards an inspection station by gravity.

In the inspection station, images of a plurality of external side surfaces of the part, angularly spaced around the axis, are acquired, forming an optical image of at least a portion of each of them. An axial view image of the part from above is also acquired. The detected optical images are processed to obtain a plurality of views of the part, angularly spaced around the axis. Next, the part is routed to an unloading station after inspection.

The corresponding system includes an angled split track, an inspection station with an imaging unit to acquire images and a processor to process the detected images. The track is separated by a gap in the inspection station to allow the undersurface of the part to be imaged as it passes through the gap. The system may also include a rejection mechanism to sort conforming and non-conforming parts.

The invention aims to perform a complete optical inspection of fast-moving parts, suspended by gravity on an angled track, providing wide coverage of the side and top surfaces, allowing accurate detection of defects or non-conforming features.

The state of the art is also represented by patent DE 102009058215 A1 concerning a process of inspection of the surface of a bearing component. The surface of the component is illuminated in a specific area, and a spatially resolving detector captures an image of the detection area overlaid on the illuminated area. The illumination/imaging geometry is chosen so that the image simultaneously shows areas under bright-field illumination and partially under dark-field illumination. Through the analysis of a boundary area, it is determined whether there are surface defects in the detection area, also evaluating the shape of this boundary area. The detection area may vary on the surface of the component. Another inspection process involves averaging the distributed brightness, checking whether there are areas with excessive deviations from the mean. The associated device includes a light source, a spatially resolving detector, an imaging optics and a transmitter for analysing the brightness distribution, determining the presence of surface defects.

US-B2-7 278 323, US-A-4 203 673 and WO-A1-2006/138220 describe other vision systems according to the prior art.

The state of the art presents the following problems which have remained unsolved:
- current processes, such as US patent 4203673 A, employ light beams from different positions, but the measurement accuracy may be limited, especially for the evaluation of subtle defects or irregularities on the surface;
- complex configurations, as in US patent 3870890 A, with rotating mirror drums and ring sensors, can increase the probability of malfunctions and require constant calibration;
- approaches such as in US patent 2017/0307541 A1, which focus on moving parts on angled tracks, may not completely cover all surfaces or angles, limiting the detection of defects in certain areas;
- configurations involving rotating mirrors, prisms, and detectors, as in patent DE 102009058215 A1, may be subject to mechanical problems and require constant maintenance;
- systems that push parts by gravity, as in US patent 2017/0307541 A1, may present risks of damage to parts during transportation or suspension, affecting the integrity of optical inspection.

Object of the present invention is therefore solving the aforementioned prior art problems by providing a system and a vision process designed to measure the straightness of the parts to be inspected, this parameter often being difficult to measure precisely using traditional optical calipers without rotating the object.

A further object is providing a system and a vision process that allow the measurement of a regular geometric shape, i.e. a geometric figure that possesses properties of symmetry and uniformity in its dimensions and angles, thus creating a harmonious and balanced geometric structure.

A further object of the present invention is providing a system and a vision process which involve the use of two video cameras positioned at 90 degrees to each other, allowing images to be acquired along two orthogonal directions, and allowing the combination of the straightness measurements obtained from the two directions.

A further object of the present invention is providing a vision system that allows the elimination of wear and mechanical loads: in fact, being a non-contact measurement system, the object of the invention eliminates problems of mechanical wear, wear and load effects on the component during the measurement step.

A further object of the present invention is providing a system and a process that allow the viewing process to be simplified: in fact, the use of two orthogonal directions simplifies the viewing process, allowing the evaluation of the straightness of the component with greater precision through the application of algorithms, including the Pythagorean theorem.

A further object of the present invention is providing a vision system and process that allow operation during the flight time of the component, allowing instant classification as good or to be rejected, contributing to the speed and efficiency of the inspection process.

A further object of the present invention is providing a vision system that allows the size of the measurement system to be minimized: in fact, the use of mirrors allows longitudinal rather than radial positioning of the optics, reducing the overall size of the system itself.

A further object of the present invention is providing a system and a vision process which provide for asynchronously synchronizing the acquisition of images, allowing the cameras to acquire images at different times, ensuring that each camera sees the backlit component without side light.

The present invention therefore concerns an innovative vision system and process designed to measure the straightness of parts to be inspected. In particular, the vision system according to the present invention differs from traditional systems, which use a single video camera, by using two video cameras positioned at 90 degrees to each other. This configuration allows images to be acquired along two orthogonal directions, allowing the combination of straightness measurements obtained from the two directions.

The analysis occurs during the component's flight time, allowing for instant classification as good or to be rejected. The main innovation consists in the improvement of a previous system, experimenting with the application of this technique. The system primarily aims to measure the straightness of parts, a parameter that is often difficult to measure with traditional optical calipers without rotating the object.

The term used to indicate straightness in mechanical component dimensions is "arrow". The object of the present invention operates without contact, eliminating mechanical wear, tear and load effects on the component. The mirrors, one for each camera, allow longitudinal rather than radial positioning of the optics, reducing the overall size of the system.

The heart of the innovation lies in observing the component along two orthogonal directions and developing an algorithm capable of extracting a single measure of straightness from the two separate images. A feeding apparatus slides one component at a time along a channel, with a photocell identifying the proximity of the component to the viewing area.

The viewing process is synchronized and asynchronous: the backlight apparatus turns on and the video camera acquires images in approximately 200 microseconds. The images captured by the two cameras flow to a common CPU, which performs image processing. The component deflection/straightness measurement is obtained by applying the Pythagorean theorem between measurements on two orthogonal planes.

The result of the measurements is compared with the limits set on the machinery, and if even just one measurement exceeds the limit, the component is considered waste to be rejected. A mechanical diversion device in the drop channel allows the components to be directed towards the good or waste bin, thus completing the inspection process.

The subject matter of the present invention offers several significant advantages.

Due to the use of two video cameras placed at 90 degrees, unlike traditional systems, a more precise measurement of the straightness of the component is obtained, reducing possible errors.

The viewing approach along two orthogonal directions allows combining straightness measurements from both directions, providing a single, accurate assessment of part straightness.

The use of the Pythagorean theorem-based algorithm during the component's time of flight allows for instant analysis, enabling rapid classification into "good" or "to be rejected".

Being a non-contact measurement system, the subject matter of the invention eliminates concerns related to mechanical wear, tear or load effects on the component to be measured, guaranteeing greater durability and stability.

The architecture with mirrors positioned longitudinally contributes to a smaller footprint, making the system more compact and suitable for limited spaces.

The asynchronous acquisition of images from the two cameras eliminates the presence of side lights, improving lighting efficiency and contributing to a clear and detailed view of the component.

With an acquisition time of approximately 200 microseconds, the subject matter of the invention allows fast inspection without compromising the quality of the measurements.

The power supply, the photocell and the synchronization electronics facilitate a smooth transition between the arrival of the component in the viewing area and the acquisition of images.

The mechanical diversion apparatus allows separating components classified as "good" from those considered "waste", contributing to an efficient and seamless production process.

The above and other objects and advantages of the invention, as will appear from the following description, are achieved with a vision system for measuring the straightness of geometrically regular inspectable parts and with a process for measuring the straightness of geometrically regular inspectable parts, as described in their respective independent claims.

Preferred embodiments and non-trivial variants of the present invention form the subject matter of the dependent claims.

It is understood that all attached claims form an integral part of this description.

It will be immediately obvious that countless variations and modifications can be made to what is described (for example relating to shape, dimensions, arrangements and parts with equivalent functionality) without departing from the scope of the invention as appears from the attached claims.

The present invention will be better described by some preferred embodiments, provided by way of example and not by way of limitation, with reference to the attached drawings, in which:
- FIG. 1 shows a functional diagram of an implementation of the vision system for measuring the straightness of geometrically regular inspectable parts according to the present invention;
- FIG. 2 shows a perspective view of the relevant apparatus of an embodiment of the vision system for measuring the straightness of geometrically regular inspectable parts according to the present invention;
- FIG. 3 shows a front view of the previous figure; and
- FIG. 4 shows a plan view of FIG. 2.

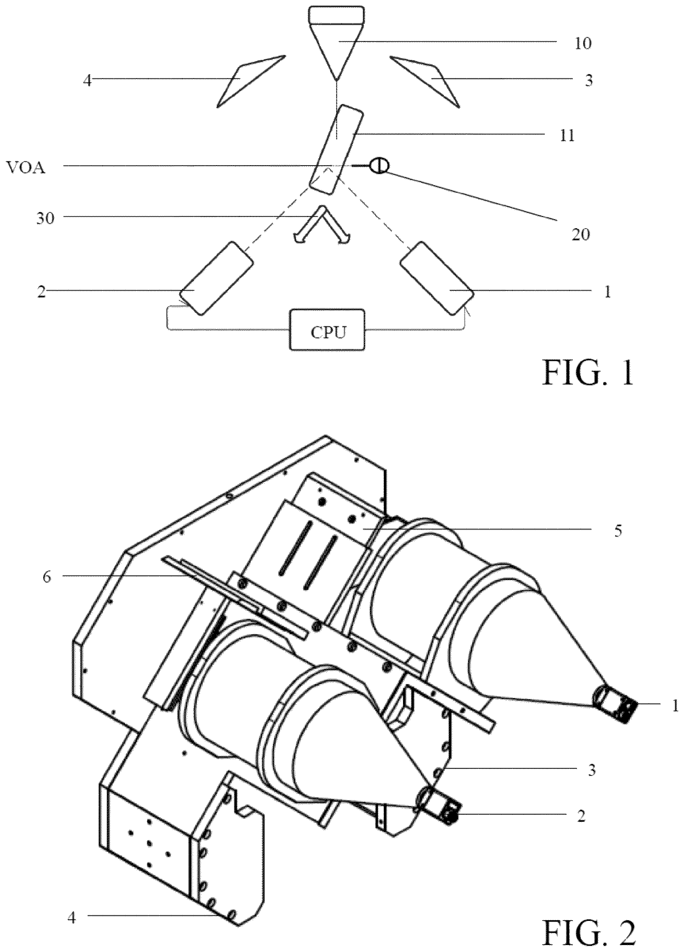

Referring to FIG. 1, it is possible to note that a vision system according to the present invention for measuring the straightness of geometrically regular inspectable parts, comprises: two video cameras 1, 2 mutually positioned at 90 degrees, allowing the acquisition of images along two orthogonal directions, a power supply 10 designed to slide the geometrically regular inspectable parts one at a time along a channel 11, a photocell 20 to identify the proximity of the geometrically regular inspectable part to a VOA viewing area, a backlight apparatus 3, 4 synchronized with the cameras 1, 2, turning on during the flight time of the geometrically regular inspectable part, a common CPU central processing unit to process the images captured by the cameras 1, 2, an algorithm based on the Pythagorean theorem to be able to uniquely measure the straightness of geometrically regular inspectable parts through images along two orthogonal directions, a mechanical deviation apparatus 30 in channel 11 to direct the geometrically regular inspectable parts towards the good or waste bin, not shown.

Advantageously, the step for measuring the straightness of geometrically regular inspectable parts occurs during the flight time of the geometrically regular inspectable parts, allowing instant classification as good or waste to be rejected.

The algorithm based on the Pythagorean theorem allows measuring the straightness of geometrically regular inspectable parts, combining what is detected through the images along two orthogonal directions, providing a single and accurate evaluation for measuring the straightness of geometrically regular inspectable parts.

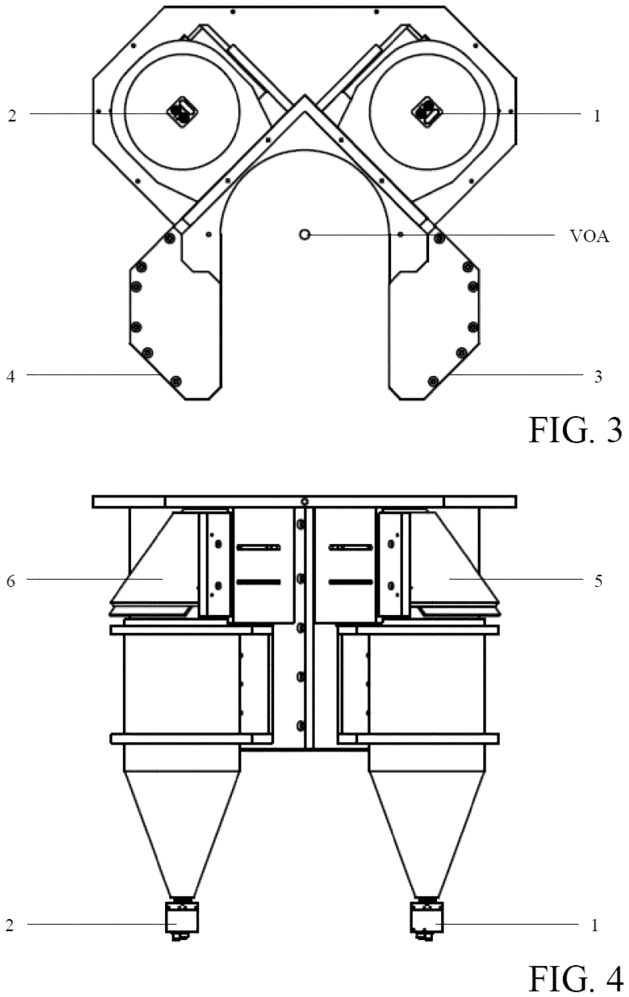

Referring to FIG. 2, 3 and 4, it can be noted that the system comprises mirrors 5, 6 designed to deviate the acquisition of images along two orthogonal directions, the use of such mirrors 5, 6 allowing longitudinal positioning of the two video cameras 1, 2, instead of radial, and reducing the overall size of the system.

Advantageously, asynchronous acquisition of images from the two video cameras 1, 2 is envisaged to eliminate the presence of side lights, improving the lighting efficiency and contributing to a clear and detailed vision of the geometrically regular inspectable parts.

The image acquisition time is approximately 200 microseconds, allowing for fast inspection without compromising the quality of the measurements.

The asynchronous acquisition of the images from the two cameras 1, 2 takes place while the geometrically regular inspectable parts are suspended by gravity on an angled track belonging to the channel 11, allowing complete coverage of the lateral surfaces and the upper part, and allowing accurate detection of defects or non-compliant characteristics.

A process according to the present invention for measuring the straightness of geometrically regular inspectable parts is carried out using a system comprising two video cameras 1, 2 mutually positioned at 90 degrees, a feeding apparatus 10 designed to slide the geometrically regular inspectable parts one at a time along a channel 11, a photocell 20 to identify the proximity of the geometrically regular inspectable part to the viewing area VOA, a backlighting apparatus 3, 4 synchronized with the cameras 1, 2, a common central processing unit, CPU, to process the images captured by the cameras 1, 2, a mechanical diversion apparatus 30 in the channel 11 to direct the geometrically regular inspectable parts towards a good or waste bin.

The process includes the following steps:
- the two video cameras 1, 2 positioned at 90 degrees to each other allow the acquisition of images along two orthogonal directions;
- the feeding apparatus 10 slides the geometrically regular inspectable parts one at a time along the channel 11;
- the photocell 20 is designed to identify the proximity of the geometrically regular inspectable part to the viewing area VOA;
- the backlight apparatus 3, 4 is synchronized with the video cameras 1, 2 and turns on during the flight time of the geometrically regular inspectable part;
- asynchronous acquisition eliminates the presence of side lights, improving lighting efficiency and contributing to a clear and detailed view of geometrically regular inspectable parts;
- the images captured by cameras 1, 2 are processed by the common CPU central processing unit using an algorithm based on the Pythagorean theorem to measure straightness along two orthogonal directions;
- the measurement of straightness occurs during the flight time of the parts, allowing instant classification as good or to be rejected.

A computer program includes computer program code means adapted to perform all or part of the steps of such process, when such program is executed on a computer.

Such computer program is intended to be contained on a computer-readable medium.

## Claims

1. Vision system for measuring the straightness of geometrically regular inspectable parts, comprising two video cameras (1, 2) positioned at 90 degrees to each other, allowing an acquisition of images along two orthogonal directions, a feeding apparatus (10) intended to make the geometrically regular inspectable parts slide one at a time along a channel (11), a photocell (20) to identify the proximity of the geometrically regular inspectable part to a viewing area, VOA, a backlight apparatus (3, 4) synchronized with the video cameras (1, 2), turning on during the flight time of the geometrically regular inspectable part, a common central processing unit, CPU, to process the images captured by the video cameras (1, 2), an algorithm based on the Pythagorean theorem to be able to uniquely measure the straightness of geometrically regular inspectable parts through images along two orthogonal directions, a mechanical deviation apparatus (30) in channel (11) to direct the geometrically regular inspectable parts towards the good or reject bin, **characterized in that** the vision system is designed for measuring the straightness of geometrically regular inspectable parts during the flight time of the geometrically regular inspectable parts, allowing a classification instant as good or waste to be rejected.

2. System according to the previous claim, **characterized in that** the algorithm based on the Pythagorean theorem allows the straightness of geometrically regular inspectable parts to be measured, combining what is detected through the images along two orthogonal directions, providing a single and accurate evaluation for measure the straightness of geometrically regular inspectable parts.

3. System according to any of the previous claims, **characterized in that** it comprises mirrors (5, 6) designed to deviate the acquisition of images along two orthogonal directions, the use of said mirrors (5, 6) allowing a longitudinal, rather than a radial, positioning of the two cameras (1, 2), and reducing the overall footprint of the system.

4. System according to any of the previous claims, **characterized in that** an asynchronous acquisition of images from the two video cameras (1, 2) is provided to eliminate the presence of side lights, improving lighting efficiency and contributing to clear vision and detailed of the geometrically regular inspectable parts.

5. System according to any of the previous claims, **characterized in that** the image acquisition time is approximately 200 microseconds, allowing fast inspection without compromising the quality of the measurements.

6. System according to claim 4, **characterized in that** the asynchronous acquisition of the images from the two video cameras (1, 2) takes place while the geometrically regular inspectable parts are suspended by gravity on an angled track belonging to the channel (11), allowing complete coverage of the side surfaces and top, and allowing accurate detection of defects or non-compliant features.

7. Process for measuring the straightness of geometrically regular inspectable parts, using a system comprising two video cameras (1, 2) positioned at 90 degrees to each other, a feeding apparatus (10) designed to slide the geometrically regular inspectable parts one at a time along a channel (11), a photocell (20) to identify the proximity of the geometrically regular inspectable part to the viewing area, VOA, a backlighting apparatus (3, 4) synchronized with the cameras (1, 2), a common central processing unit, CPU, to process the images captured by the cameras (1, 2), a mechanical diversion apparatus (30) in the channel (11) to direct the geometrically regular inspectable parts towards a good or waste bin, **characterized in that** it includes the following steps:
- the two video cameras (1, 2) positioned at 90 degrees to each other allow the acquisition of images along two orthogonal directions;
- the feeding apparatus (10) slides the geometrically regular inspectable parts one at a time along the channel (11);
- the photocell (20) is designed to identify the proximity of the geometrically regular inspectable part to the viewing area, VOA;
- the backlight apparatus (3, 4) is synchronized with the video cameras (1, 2) and turns on during the flight time of the geometrically regular inspectable part;
- the asynchronous acquisition eliminates the presence of side lights, improving lighting efficiency and contributing to a clear and detailed view of geometrically regular inspectable parts;
- the images captured by the cameras (1, 2) are processed by the common central processing unit, CPU, using an algorithm based on the Pythagorean theorem to measure straightness along two orthogonal directions;
- the measurement of straightness occurs during the flight time of the parts, allowing instant classification as good or waste to be rejected.

8. A computer program comprising computer program code means adapted to perform the following steps of the process of claim 7, when said program is executed on a computer:
• processing of images acquired by video cameras;
• calculation of the straightness of the geometrically regular inspectable parts through the images acquired along two orthogonal directions; and
• application of an algorithm based on the Pythagorean theorem to uniquely determine straightness.

9. A computer readable medium having stored thereon the computer program according to claim 8.
